# EUROPÄISCHE PATENTANMELDUNG

(11) **EP 0 721 980 A2**
(43) Veröffentlichungstag der Anmeldung: **17.07.1996**
(21) Anmeldenummer: 95119848.0
(22) Anmeldetag: 15.12.1995
(51) Int. Cl.: C11B 1/10, B01D 11/02

(54) **Verfahren zur selektiven Extraktion von Fetten und/oder Ölen aus festen Naturstoffen**

(30) Priorität: 17.12.1994 DE 4445134
(71) Anmelder: SKW Trostberg Aktiengesellschaft, D-83308 Trostberg (DE)
(72) Erfinder: Heidlas, Jürgen, Dr., D-83308 Trostberg (DE); Huber, Georg, D-83352 Altenmarkt (DE); Cully, Jan, Dr., D-84518 Garching (DE); Vollbrecht, Heinz-Rüdiger, Dr., D-83352 Altenmarkt (DE)
(74) Vertreter: Huber, Bernhard, Dipl.-Chem.

(57) **Zusammenfassung**

Zur selektiven Extraktion von Fetten und/oder Ölen aus festen Naturstoffen mit verdichteten Gasen führt man die Extraktion mit einem Gemisch aus Propan und maximal 50 Gew.-% Kohlendioxid bei Temperaturen < 96°C und Drücken < 73 bar durch, wobei sich die beiden Reingase jeweils im unterkritischen Zustand befinden.

## Beschreibung

Die vorliegende Erfindung betrifft ein Verfahren zur selektiven Extraktion von Fetten und/oder Ölen aus pflanzlichen, tierischen oder mikrobiellen festen Naturstoffen mit einer Mischung aus den beiden verdichteten Gasen Propan und Kohlendioxid.

Bei extraktiven Verfahren zur Öl- und Fettgewinnung aus Naturstoffen können prinzipiell unter Normalbedingungen flüssige oder gasförmige Lösemittel eingesetzt werden. Üblicherweise werden im großtechnischen Maßstab häufig Extraktionen mit Hexan oder Leichtbenzin (Petrolether) durchgeführt, wobei allerdings die Selektivität des Prozesses oft nicht ausreichend ist, weshalb eine mehrstufige Raffination der Extrakte angeschlossen werden muß. Darüber hinaus muß das flüssige Lösemittel sowohl aus dem Extrakt als auch dem Extraktionsrückstand entfernt werden, was teilweise erhöhte Prozeßtemperaturen notwendig macht. Insbesondere, wenn auf diese Weise entölte oder entfettete Extraktionsrückstände als Ausgangsmaterial für die Lebensmittelindustrie verwendet werden sollen, kann eine weitgehende Entfernung des Lösemittels insofern technologische Probleme bereiten, als empfindliche Produkte durch sie eine thermische Schädigung erfahren. Auch ein zunehmend kritischer werdendes Verbraucherverhalten im Zusammenhang mit der Lösemittelrückstandsproblematik in Lebensmitteln und die gleichzeitig strenger werdenden gesetzlichen Bestimmungen und Vorschriften fordern von der modernen Lebensmitteltechnologie Verfahrensverbesserungen.

Unter dem Aspekt der Rückstandssituation bieten Extraktionen, die verdichtete Gase als Solventien einsetzen, entscheidende Vorteile, da die eigentliche Lösemittelrückstandsproblematik im Lebensmittel (Extraktionsrückstand und/oder Extrakt) vernachlässigt werden kann. Von den in den derzeitigen Bestimmungen der EU uneingeschränkt für die Lebensmitteltechnologie zugelassenen Gasen Butan, Kohlendioxid, Propan und Distickstoffmonoxid sind vor allem Kohlendioxid und Propan als Lösemittel für Entölungen und Entfettungen beschrieben. Zwar zeigt Kohlendioxid bei schonenden Prozeßbedingungen eine sehr hohe Extraktionsselektivität, es bietet aber oft nur im überkritischen Zustand (T > 31°C, p > 73 bar) ein befriedigendes Lösevermögen. Insbesondere bei Fetten und Ölen ist in der Regel ein Verfahrensdruck von > 500 bar nötig, um die Prozeßzeiten in technologisch akzeptablen Grenzen zu halten (Stahl, E., Quirin, K.-W., Gerard, D., Verdichtete Gase zur Extraktion und Raffination, Springer Verlag, Berlin, 1988). Unter wirtschaftlichen Gesichtspunkten muß folglich trotz der vielen potentiellen Anwendungsmöglichkeiten von überkritischem Kohlendioxid gesehen werden, daß Entfettungs- und Entölungsverfahren unter Verwendung von überkritischem Kohlendioxid wenig attraktiv sind.

Im Gegensatz zum Kohlendioxid zeigt verdichtetes Propan bereits bei einem sehr viel niedrigeren Verfahrensdruck (< 50 bar) ein sehr gutes Lösevermögen für lipophile Stoffe. Dieser Vorteil wird bereits seit längerer Zeit bei der Gasextraktion von Fetten und Ölen beschrieben, wie z. B. in den US-Patenten 2,254,245, 2,560,935, 2,548,434, 2,682,551 oder auch in US 4,331,695. Ein schwerwiegender Nachteil von verdichtetem Propan als Extraktionssolvens ist aber generell dessen geringere Selektivität im Vergleich zum Kohlendioxid, was sich besonders in der unerwünschten Co-Extraktion von Begleitstoffen, wie z. B. Farbstoffe und Phospholipide, zeigt. Zwar kann durch eine geschickte Wahl der Verfahrensparameter die Selektivität der Propanextraktion gesteigert werden (vgl. DE 43 26 399 A1), jedoch ist sie für zahlreiche Anwendungen nicht ausreichend, so daß die extrahierten Fette und Öle weiter aufgearbeitet bzw. raffiniert werden müssen.

Gemäß der DE 34 29 416 A1 wurde mit einem Verfahren zur Extraktion von Öl aus ölhaltigen vegetabilen Stoffen versucht, die geringe Lösekapazität von überkritischem Kohlendioxid für pflanzliche Öle dadurch zu verbessern, daß ein unterkritisches Schleppmittel, wie z. B. Propan oder Butan, der Extraktion zugespeist wurde. Mit dieser Verfahrensvariante kann man zwar die Löslichkeit für Öl im Vergleich zur reinen Kohlendioxidextraktion deutlich verbessern, aber die notwendigen Verfahrensdrücke müssen immer noch zwischen 80 und 300 bar liegen, um das Kohlendioxid im überkritischen Zustand zu halten. Die zur Erreichung des Extraktionszieles notwendigen spezifischen Gasdurchsatzraten liegen außerdem immer noch sehr hoch, so daß eine lange und damit unwirtschaftliche Extraktionszeit in Kauf genommen werden muß.

Der Erfindung liegt somit die Aufgabe zugrunde, mit Hilfe eines Verfahrens zur selektiven Extraktion von Fetten und/oder Ölen aus festen Naturstoffen die Nachteile der bekannten Verfahren zu überwinden und ein wirtschaftliches Verfahren mit verbesserter Selektivität zur Gewinnung von Fetten und/oder Ölen unter Verwendung von verdichteten Gasen zu schaffen. Ferner sollten allgemein schonende Prozeßbedingungen im Hinblick auf eine gute Produktqualität und insbesondere ein niedriger Verfahrensdruck und eine günstige spezifische Gasdurchsatzrate erreicht werden.

Gelöst wird diese Aufgabe, indem man die Extraktion von Fetten und/oder Ölen mit einem Gemisch bestehend aus Propan und maximal 50 Gew.-% Kohlendioxid bei Temperaturen < 96°C und Drücken < 73 bar durchführt, wobei sich die beiden Reingase jeweils im unterkritischen Zustand befinden. Überraschenderweise wurde festgestellt, daß das Gasgemisch unter diesen Zustandsbedingungen zum einen ein sehr hohes Lösevermögen für Öle und Fette besitzt (vergleichbar mit reinem verdichteten Propan), gleichzeitig aber die Löseselektivität von überkritischem Kohlendioxid aufweist. Dabei kann jedoch der günstige Verfahrensdruck ähnlich der Extraktion mit reinem Propan eingehalten werden. Im Gegensatz zu früheren Verfahren kann beim erfindungsgemäßen Verfahren der Anteil an verdichtetem Kohlendioxid, der stets ≦ 50 Gew.-% gewählt wird, als "Selektivitätsmodulator" angesehen werden, mit dem eine überraschend hohe Selektivitätszunahme erreicht wird.

Das Verfahren der Erfindung vereinigt also die entscheidenden Vorteile der Gasextraktion mit überkritischem Kohlendioxid (hohe Extraktionsselektivität) und verdichtetem Propan (hohes Lösevermögen bei niedrigem Verfahrensdruck), ohne deren Nachteile aufzuweisen.

Wie bereits erwähnt, werden bei der Extraktion von Fetten und Ölen aus Naturstoffen je nach der Selektivität des Verfahrens auch eine Anzahl unerwünschter Begleitstoffe mitextrahiert, die bei den bekannten Verfahren oftmals mit sich anschließenden Verfahrensschritten abgetrennt werden müssen, um eine gute Produktqualität zu erreichen. Typische Fettbegleitstoffe in Naturstoffen sind z. B. Phospholipide (Lecithine), Farbstoffe oder Wachse. Beim erfindungsgemäßen Verfahren kann jetzt durch den Zusatz von Kohlendioxid zu verdichtetem Propan die unerwünschte Co-Extraktion dieser Stoffe gezielt zurückgedrängt werden, wobei im wesentlichen die Zusammensetzung des Ausgangsmaterials und die zu erreichende Qualität des Produktes die Höhe des Kohlendioxidanteils bestimmen.

Bevorzugt werden Kohlendioxidanteile zwischen 20 und 40 Gew.-%, wobei in diesem Fall der Verfahrensdruck zwischen 25 und 40 bar liegt und die Extraktionstemperatur < 50°C gewählt wird. So wird z. B. bei der Entölung von Sojaflakes bereits bei einem Anteil von 10 Gew.-% Kohlendioxid eine erkennbare Abnahme der Phospholipide im extrahierten Sojaöl festgestellt. Bei einem Kohlendioxidgehalt ab ca. 40 Gew.-% kann ein hochentschleimtes Sojaöl gewonnen werden, das einen Gesamtphosphorgehalt < 5 ppm besitzt. Zusätzlich ist die Selektivitätszunahme der Extraktion sehr gut an den optischen Vorteilen in Form einer deutlich helleren Farbe des gewonnenen Öles zu erkennen. Die zur Extraktion benötigte Gasmenge kann in einem relativ weiten Bereich variiert werden und hängt im wesentlichen vom Ausgangsmaterial der Gaszusammensetzung und dem angestrebten Extraktionsziel ab. Typische Extraktionsmengen liegen zwischen 1 bis 10 g Extraktionsgemisch für 1 g zu extrahierendes Öl oder Fett.

Das Verfahren ist sehr gut für die Extraktion sensitiver Naturstoffe geeignet, da es unter sehr produktschonenden Prozeßbedingungen durchgeführt werden kann. Wesentlich für das Verfahren ist die Tatsache, daß es immer bei Extraktionstemperaturen < 96°C (der kritischen Temperatur von Propan) und Extraktionsdrücken < 73 bar (dem kritischen Druck von Kohlendioxid) durchgeführt wird. Unter diesen Bedingungen sind die beiden Reingase unterkritisch (Propan: Tc = 96°C, Pc = 42 bar; Kohlendioxid: Tc = 31°C, Pc = 73 bar). Insbesondere bei der Extraktion von temperaturempfindlichen Naturstoffen wird bevorzugt eine Verfahrenstemperatur von < 60°C gewählt, um eine thermische Schädigung spezieller Inhaltsstoffe, wie z. B. hochungesättigter Fettsäuren oder Proteine, zu vermeiden. Allgemein betrachtet ist bei einer durch das Verfahren vorgegebenen Extraktionstemperatur lediglich ein solcher Extraktionsdruck notwendig, der das Gasgemisch im flüssigen Zustand hält; er darf aber 73 bar, den kritischen Druck von Kohlendioxid, nicht überschreiten.

Die extrahierten Fette und/oder Öle werden nach der Extraktion durch Temperaturerhöhung und/oder Druckabsenkung aus dem Extraktionsgemisch abgeschieden, da unter solchermaßen veränderten Zustandsbedingungen das Lösevermögen der Gasmischung sehr stark herabgesetzt wird. Dabei hängt das Ausmaß der Temperaturerhöhung und/oder der Druckabsenkung stark von der gewählten Zusammensetzung des Gasgemisches ab, das für die jeweilige Extraktion eingesetzt wird.

Verfahrenstechnisch werden zwei Möglichkeiten zur Abscheidung der Extrakte bevorzugt:
(i) Der Druck und/oder die Temperatur werden in einem Extraktabscheider so weit abgesenkt bzw. erhöht, bis das Gasgemisch vollständig in die Gasphase überführt wird. Aufgrund der geringen Löslichkeit der Extrakte in der Gasphase werden diese als Folge aus dem gasförmigen Gasgemisch abgeschieden. In einer bevorzugten Verfahrensform wird zu Minimierung der thermischen Belastung der Extrakte die Abscheidetemperatur < 60°C gehalten. Abhängig von der Zusammensetzung des Extraktionsgemisches liegt dann der Druck im Abscheider zwischen 8 und 30 bar.
(ii) Insbesondere bei niedrigen Anteilen an Kohlendioxid im Extraktionsgemisch kann das reverse Lösevermögen von Propan in der Nähe des kritischen Zustandes ausgenutzt werden, d. h. das Extraktionsgemisch wird nicht in den gasförmigen Zustand überführt, sondern wird ausgehend vom flüssigen Zustand bei der Extraktion in die Nähe des kritischen Zustandes bei der Extraktabscheidung gebracht, wobei ebenfalls das Lösevermögen für Fette und Öle sehr stark abgesenkt werden kann. Im Gegensatz zur erstgenannten Möglichkeit ist jedoch die zweite weniger temperaturschonend, da gemäß einer bevorzugten Variante bei Kohlendioxidanteilen < 20 Gew.-% mit Abscheidetemperaturen im Bereich von 90 bis 100°C, also in der Nähe der kritischen Temperatur von Propan (Tc = 96°C), und einem Abscheidedruck gearbeitet werden muß, der zwischen 42 und 80 bar liegt.

In einer bevorzugten Ausführungsform des Verfahrens gewinnt man das Extraktionsgasgemisch nach der Abscheidung der Extrakte in einem Extraktabscheider direkt in einer Extraktionsanlage zurück, stellt es wieder auf den Extraktionszustand ein und führt es erneut der Extraktion zu (Kreisprozeß). Durch den niedrigen Extraktionsdruck und den günstigen Lösemittelbedarf kann somit mit dem erfindungsgemäßen Verfahren eine selektive Gasextraktion von Fetten und Ölen mit deutlich verbesserter Wirtschaftlichkeit als bisher durchgeführt werden.

Ganz allgemein kann das vorliegende Verfahren für die Verarbeitung zahlreicher empfindlicher Naturstoffe vorteilhaft eingesetzt werden. Dabei kommen alle festen Ausgangsstoffe pflanzlichen, mikrobiellen und tierischen Ursprungs in Frage, die auch sonst für die Öl- und Fettgewinnung herangezogen werden. Beispiele aus dem Bereich der pflanzlichen Ausgangsstoffe sind Saaten wie Sojabohnen oder Rapssamen und Pflanzenkeimlinge wie Weizenkeime. Als mikrobielle Ausgangsstoffe können z. B. getrocknete Fermentationsrückstände herangezogen werden, die einen hohen Gehalt der gewünschten Lipidkomponenten enthalten. Als Produkt tierischen Ursprungs sei beispielhaft Wolle genannt, aus der sich Wollfett (Lanolin) in sehr guter Qualität gewinnen läßt.

Die nachfolgenden Beispiele sollen das erfindungsgemäße Verfahren verdeutlichen, wobei insbesondere die gezielte Steuerung der Selektivitätseigenschaften veranschaulicht wird.

### Beispiele

Die Beispiele 1 bis 6 beschreiben die Anwendung des Verfahrens beim pflanzlichen Ausgangsstoff Soja.

In einer Hochdruckextraktionsanlage wurden in einem Extraktionsautoklaven mit einem Volumen von 4 l jeweils 1,7 kg geflakte Sojabohnen (Ölgehalt 21,0 %) eingebracht und bei jeweils 40°C Extraktionstemperatur unter den in Tabelle 1 angegebenen Bedingungen extrahiert. Mit dem jeweils angegebenen spezifischen Gasdurchsatz wurde die entsprechende Extraktionsausbeute erzielt. Die Analyse des Gesamtphosphors erfolgte röntgenfluorimetrisch.

**Tabelle 1**

| Beispiel Nr. | Propan/CO₂ (Gew.-%) | Extraktionsdruck (bar) | Abscheide- | | Spezifischer Gasdurchsatz (kg/kg AM) | Extraktausbeute (Gew.-%) | Ges.-P im Extrakt (ppm) |
|---|---|---|---|---|---|---|---|
| | | | Druck (bar) | Temperatur (°C) | | | |
| 1 (Vergleich) | 100/0 | 20 | 50 | 100 | 8 | 20,5 | 332 |
| 2 | 90/10 | 25 | 50 | 100 | 10 | 20,4 | 258 |
| 3 | 80/20 | 35 | 11 | 50 | 10 | 20,1 | 206 |
| 4 | 70/30 | 40 | 20 | 50 | 10 | 20 | 156 |
| 5 | 60/40 | 50 | 25 | 50 | 10 | 19,6 | 3 |
| 6 | 50/50 | 55 | 30 | 50 | 15 | 19,6 | < 1 |
| Neben der Abnahme des Gesamtphosphors wurde eine deutliche Verbesserung der Farbe des Öls von Beispiel 1 zu Beispiel 6 hin festgestellt: Die Öle aus Beispiel 5 und 6 waren klar, trubstabil und von hellgelber Farbe. | | | | | | | |

Die Beispiele 7 bis 11 beschreiben das Verfahren bei der Extraktion von Ölen aus getrockneten Fermentationsrückständen zur Gewinnung PUFA-reicher Öle (PUFA = poly unsaturated fatty acids).

Ausgangsmaterial war ein getrockneter Fermentationsrückstand (Wassergehalt < 5 %), der pelletiert worden war (Pelletgröße ca. 2 mm). Der Gesamtölgehalt betrug zu Beginn der Extraktion 46 Gew.-%. Das Ausgangsmaterial wurde in Mengen von jeweils 0,5 kg in einer Hochdruckextraktionsanlage mit einem Autoklavenvolumen von ca. 1 l eingebracht. Die Extraktionstemperatur betrug jeweils 40°C.

**Tabelle 2**

| Beispiel Nr. | Propan/CO₂ (Gew.-%) | Extraktionsdruck (bar) | Abscheide- | | Spezifischer Gasdurchsatz (kg/kg AM) | Extraktausbeute (Gew.-%) | Ges.-P im Extrakt (ppm) |
|---|---|---|---|---|---|---|---|
| | | | Druck (bar) | Temperatur (°C) | | | |
| 7 (Vergleich) | 100/0 | 20 | 8 | 50 | 20 | 44 | 1000 |
| 8 | 90/10 | 25 | 11 | 50 | 20 | 43 | 800 |
| 9 | 80/20 | 30 | 11 | 50 | 20 | 43 | 200 |
| 10 | 70/30 | 40 | 20 | 50 | 30 | 43 | 200 |
| 11 | 60/40 | 50 | 25 | 50 | 30 | 42 | < 5 |
| In der Versuchsreihe verbesserten sich die farblichen Eigenschaften des extrahierten Öles wesentlich: In Beispiel 7 war das Öl dunkelbraun, in Beispiel 11 hellgelb und klar. | | | | | | | |

Die Beispiele 12 und 13 beschreiben die Vorteile des Verfahrens bei der Extraktion von Wollfett aus Schafwolle (Ausgangsmaterial tierischen Ursprungs).

Hierfür wurden jeweils in den 4 l-Autoklaven einer Hochdruckextraktionsanlage 1 kg Rohwolle (Auflage an Wollfett 11,5 Gew.-%, als CH₂Cl₂ extrahierbare Anteile) eingebracht und bei jeweils 40°C unter den in Tabelle 3 angegebenen Bedingungen und mit den angegebenen Ergebnissen extrahiert.

**Tabelle 3**

| Beispiel Nr. | Propan/CO₂ (Gew.-%) | Extraktionsdruck (bar) | Abscheide- | | Spezifischer Gasdurchsatz (kg/kg AM) | Extraktausbeute (Gew.-%) | Farbe des extrahierten Wollfettes |
|---|---|---|---|---|---|---|---|
| | | | Druck (bar) | Temperatur (°C) | | | |
| 12 (Vergleich) | 100/0 | 20 | 8 | 50 | 5 | 8,5 | dunkelbraun |
| 13 | 60/40 | 55 | 25 | 50 | 8 | 7,3 | hellgelb |

## Patentansprüche

1. Verfahren zur selektiven Extraktion von Fetten und/oder Ölen aus festen Naturstoffen mit verdichteten Gasen,
dadurch gekennzeichnet,
daß man die Extraktion mit einem Gemisch aus Propan und maximal 50 Gew.-% Kohlendioxid bei Temperaturen < 96°C und Drücken < 73 bar durchführt, wobei sich die beiden Reingase jeweils im unterkritischen Zustand befinden.

2. Verfahren nach Anspruch 1,
dadurch gekennzeichnet,
daß der Anteil an Kohlendioxid im Gasgemisch zwischen 20 und 40 Gew.-% beträgt.

3. Verfahren nach Anspruch 1 oder 2,
dadurch gekennzeichnet,
daß die Extraktionstemperatur < 50°C beträgt und der Extraktionsdruck zwischen 25 und 45 bar liegt.

4. Verfahren nach einem der Ansprüche 1 bis 3,
dadurch gekennzeichnet,
daß pro Gramm zu extrahierendem Fett und/oder Öl 1 bis 1O g des Propan/Kohlendioxid-Gemisches verwendet werden.

5. Verfahren nach einem der Ansprüche 1 bis 4,
dadurch gekennzeichnet,
daß die Fette und/oder Öle durch Temperaturerhöhung und/oder Druckabsenkung aus dem Gasgemisch abgeschieden werden.

6. Verfahren nach Anspruch 5,
dadurch gekennzeichnet,
daß die Abscheidetemperatur < 60°C beträgt und der Abscheidedruck zwischen 8 und 30 bar liegt.

7. Verfahren nach einem der Ansprüche 1 bis 6,
dadurch gekennzeichnet,
daß bei Verwendung temperaturempfindlicher Naturstoffe die Verfahrenstemperatur < 60 °C liegt.

8. Verfahren nach Anspruch 5,
dadurch gekennzeichnet,
daß bei Kohlendioxidanteilen < 20 Gew.-% die Abscheidetemperatur auf 90 bis 100°C und der Abscheidedruck auf 42 bis 80 bar eingestellt werden.

9. Verfahren nach einem der vorhergehenden Ansprüche,
**dadurch gekennzeichnet,**
daß Sojabohnen, Raps, Pflanzenkeimlinge, Fermentationsrückstände oder Wolle extrahiert werden.
